# EUROPÄISCHE PATENTANMELDUNG

(11) **EP 4 091 437 A1**
(43) Veröffentlichungstag der Anmeldung: **23.11.2022**
(21) Anmeldenummer: 21175077.3
(22) Anmeldetag: 20.05.2021
(51) Int. Cl.: A01G 9/14, C09D 183/02

(54) **VERFAHREN ZUR HERSTELLUNG EINER HYDROPHILEN BESCHICHTUNG EINES FLUORPOLYMERMATERIALS**

(71) Anmelder: Hueck Folien Gesellschaft m.b.H., 4342 Baumgartenberg (AT); Nowofol Kunststoffprodukte GmbH & Co. KG, 83313 Siegsdorf (DE)
(72) Erfinder: Höllmüller, Alexander, 4482 Ennsdorf (AT); Lorret, Olivier, 4482 Ennsdorf (AT); Lindmeir, Thomas, 4224 Wartberg ob der Aist (AT); Freutsmiedl, Andreas, 83236 Übersee (DE); von Großmann, Ulrich, 83313 Siegsdorf (DE); Behamer, Alexander, 83139 Söchtenau (DE)
(74) Vertreter: KLIMENT & HENHAPEL

(57) **Zusammenfassung**

Ein Verfahren zur Herstellung einer hydrophilen Beschichtung eines Fluorpolymermaterials, vorzugsweise einer Fluorpolymerfolie, umfasst die Schritte des
- Bereitstellens einer wässrigen Dispersion von Silikat-Nanopartikeln,
- Aufbringens der Silikatdispersion auf dem Fluorpolymermaterial und
- Trocknens der aufgebrachten Beschichtung,
wobei ein beschichtetes Fluorpolymermaterial erhalten wird, das einen Kontaktwinkel mit Wasser unter 30° aufweist. Das derart beschichtete Fluorpolymermaterial ist äußerst witterungsstabil und weist eine lange Lebensdauer auf.

## Beschreibung

### GEBIET DER ERFINDUNG

Die Erfindung betrifft ein Verfahren zur Herstellung einer hydrophilen Beschichtung eines Fluorpolymermaterials, wobei ein beschichtetes Fluorpolymermaterial erhalten wird, das einen Kontaktwinkel mit Wasser unter 30° aufweist, sowie ein durch das Verfahren erhältliches hydrophiles Fluorpolymermaterial.

### STAND DER TECHNIK

Fluorpolymere, oder auch Fluorkunststoffe, sind Polymere auf Basis von Fluorkohlenstoffen mit mehrfachen Kohlenstoff-Fluor-Bindungen, bei denen meist ein großer Teil oder sogar alle sonst enthaltenen Wasserstoffe durch Fluor ersetzt sind. Zu den bekanntesten Fluorpolymeren zählen unter anderem Polyvinylfluorid (PVF), Polyvinylidendifluorid (PVDF), Polytetrafluorethylen (PTFE), Ethylentetrafluorethylen (ETFE), Perfluoralkoxy-Polymere (PFA) und Tetrafluorethylen-Hexafluorpropylen-Copolymere (FEP).

Fluorpolymere besitzen eine hohe chemische und thermische Stabilität, gute elektrische Isoliereigenschaften, hervorragende Witterungsbeständigkeit, eine gute Kerbschlagzähigkeit, antiadhäsives Verhalten und sie sind unbrennbar. Aus dem antiadhäsiven Verhalten folgen eine geringe Benetzbarkeit sowie gute Gleiteigenschaften. Fluorpolymere sind außerdem physiologisch unbedenklich.

Diese Eigenschaften machen Fluorpolymere sehr vielseitig. So werden sie beispielsweise in Hochleistungslagern und Dichtungen für Autos und Flugzeuge, feuerabweisenden Stoffen, Kabelbeschichtungen, Beschichtungen von Küchenprodukten, Rohren und Chemikalientanks sowie Implantaten und Kathetern für Biomedizin-Anwendungen verwendet.

Ethylen-Tetrafluorethylen-Copolymer (ETFE) ist ein Fluor-Copolymer, das aus den Monomeren Tetrafluorethylen und Ethylen besteht und beispielsweise unter den Handelsnamen *Dyneon ETFE* (Dyneon), *Tefzel* (DuPont), *Fluon ETFE* (Asahi Glass) sowie *F-Clear* für Folien bekannt ist. Bei ETFE handelt es sich um ein Derivat des auch als *Teflon* bekannten Kunststoffs PTFE.

Folien aus ETFE weisen ein geringes Eigengewicht sowie eine hohe Licht- und UV-Durchlässigkeit auf (bei 200 nm beträgt sie bei einer 25 µm dicken Folie 91,5 %, während Fensterglas bei dieser Wellenlänge undurchlässig ist). Aus diesem Grund werden ETFE-Folien mit einer Stärke von 50 bis 250 µm in der Architektur gerne bei Membrankonstruktionen verwendet, wobei die Folien zum Beispiel als Überdachung von Schwimmbädern und Gewächshäusern oder anderen Gebäuden, wie Fußballstadien, zum Einsatz kommen.

Wegen der geringen Wasserbenetzbarkeit solcher Folien aufgrund ihrer Hydrophobizität kann es jedoch zu einer unerwünschten Bildung von Kondenswasser kommen, das zu einer Verschlechterung der Lichtdurchlässigkeit führt und dessen herabfallende Tropfen insbesondere bei Gewächshäusern zu einer Beeinträchtigung des Wachstums der angebauten Kulturpflanzen führen können.

Um diese Probleme zu vermeiden werden häufig hydrophil beschichtete (z.B. nach dem Verfahren der EP 1647568 A1) Polyethylen-Folien bei der Gestaltung von Gewächshäusern und Folientunnel eingesetzt. Diese sind UV-durchlässig sowie chemisch resistent und entfalten aufgrund ihrer hydrophilen Charakteristika eine Antitau- und Antinebelwirkung. Allerdings ist die Lebensdauer von solchen PE-Folien eher gering und beträgt nur wenige Jahre, weshalb diese Folien in der Regel alle 2-3 Jahre ausgetauscht werden müssen.

Es ist deshalb wünschenswert und vorteilhaft, ETFE-Folien, welche eine sehr lange Lebensdauer aufweisen, hydrophiler auszubilden, d.h. den Wasserkontaktwinkel zu senken, insbesondere unter 30° zu verringern.

Gemäß EP 1 319 495 A1 wird einer ETFE-Folie durch Beschichtung mit einem Kolloid-Sol aus anorganischem Material wie SiO₂ oder durch Sputtern mit einem Oxid eines Metalls wie Si und/oder Sn hydrophile Eigenschaft verliehen.

In EP 2 096 191 A1 wird ein Verfahren beschrieben, bei dem eine fluordotierte Siliziumoxidschicht mittels Plasma-CVD auf ein ETFE-Substrat aufgebracht wird. Diese Schicht verleiht dem Substrat eine hohe Lichtdurchlässigkeit und einen Wasserkontaktwinkel von höchstens 20°.

### AUFGABE DER ERFINDUNG

Aufgabe der Erfindung ist es, die Nachteile des Stands der Technik zu überwinden und ein hydrophiles Fluorpolymermaterial bereitzustellen, das einen Kontaktwinkel mit Wasser unter 30° aufweist und eine lange Lebensdauer besitzt, sowie ein technisch relativ einfaches Verfahren zur Herstellung einer hydrophilen Beschichtung vorzuschlagen, durch das ein solches witterungsstabiles Fluorpolymermaterial erhalten werden kann.

### DARSTELLUNG DER ERFINDUNG

Diese Aufgabe wird bei einem Verfahren der eingangs genannten Art durch die Merkmale der unabhängigen Ansprüche gelöst. Weiterbildungen der Erfindung sind Gegenstand der Unteransprüche.

Gemäß dem ersten Aspekt der Erfindung umfasst ein Verfahren zur Herstellung einer hydrophilen Beschichtung eines Fluorpolymermaterials, vorzugsweise einer Fluorpolymerfolie, wobei ein beschichtetes Fluorpolymermaterial erhalten wird, das einen Kontaktwinkel mit Wasser unter 30° aufweist, folgende Schritte:
- Bereitstellen einer wässrigen Dispersion von Silikat-Nanopartikeln,
- Aufbringen der Silikatdispersion auf dem Fluorpolymermaterial und
- Trocknen der aufgebrachten Beschichtung.

Anders als beim Stand der Technik ist es erfindungsgemäß nicht notwendig, sich zur Aufbringung der Beschichtung einer plasmaunterstützten chemischen Gasphasenabscheidung oder ähnlicher Prozesse zu bedienen, die aufwendige und kostenintensive Vorrichtungen und Anlagen erforderlich machen. Die Beschichtung erfolgt gemäß der Erfindung durch konventionelle Beschichtungsvorgänge, wie Streichen oder Tauchen, die z.B. mit herkömmlichen Anlagen zum Drucken und Lackieren vorgenommen werden können.

Bei der nach dem Aufbringen der Nanopartikeldispersion auf dem Fluorpolymermaterial erfindungsgemäß durchgeführten thermischen Trocknung können sich die Nanopartikel derart geordnet ausrichten, dass der gewünschte hydrophile Effekt entsteht. Die gebildeten nanoskaligen Strukturen, für deren Entstehen eine bestimmte Partikelgrößenverteilung der Silikatteilchen in der Dispersion von Vorteil ist, führen dazu, dass der Kontaktwinkel mit Wasser bei den beschichteten Fluorpolymerfolien unter 30° liegt und deshalb eine insbesondere bei Verwendung der Folien für Gewächshäuser nachteilige Kondenswasserbildung unterbunden wird.

Gemäß einer bevorzugten Ausführungsform beträgt der Mittelwert der Partikelgrößenverteilung in der Dispersion 1-100 nm, bevorzugt 5-80 nm, besonders bevorzugt 10-60 nm.

Gemäß einer anderen bevorzugten Ausführungsform erfolgt das Trocknen der aufgebrachten Beschichtung bei einer Temperatur von 40-130°C, bevorzugt 60-120°C, besonders bevorzugt 60-100°C.

Nach einer weiteren Ausgestaltung des erfindungsgemäßen Verfahrens erfolgt das Trocknen der aufgebrachten Beschichtung vorzugsweise für eine Dauer von 0,01-8 min, bevorzugt 0,05-7 min, besonders bevorzugt 0,1-5 min.

In einer bevorzugten Ausführungsform umfassen die Silikat-Nanopartikel Tetraalkoxysilane, wie Tetraethylorthosilikat (TEOS; auch Ethylsilikat oder Tetraethoxysilan genannt), Tetramethylorthosilikat (TMOS), Tetrapropylorthosilikat (TPOS) und deren Polymere, vorzugsweise bestehen die Silikat-Nanopartikel daraus.

Vorzugsweise handelt es sich beim Fluorpolymermaterial, das beschichtet wird, um Ethylen-tetrafluorethylen-copolymer (ETFE), Polyvinylidendifluorid (PVDF) und/oder ein Fluorpolymer (FP).

Das Fluorpolymermaterial, das mit der hydrophilen Beschichtung versehen wird, also z.B. die Fluorpolymerfolie, kann bereits beschichtet sein, bevor das erfindungsgemäße Verfahren zur Anwendung kommt. Beispielsweise können auf dem Fluorpolymermaterial Haftvermittler- oder Grundierungsschichten ausgebildet sein, über denen die Silikatdispersion aufgebracht wird.

Gemäß einer Ausführungsform wird die Oberflächenenergie des Fluorpolymermaterials vorteilhaft mittels Grundierung erhöht, wobei die Grundierung bevorzugt auf Basis von wasserverdünnbaren Acrylat- und/oder Polyurethanbindemitteln erfolgt.

Aufgrund der Reaktionsträgheit der Fluorpolymere ist eine chemische Verbindung normalerweise schwierig, weshalb es für eine gute Haftung der Beschichtung auf der Folie von Vorteil sein kann, wenn die Oberflächenenergie des Fluorpolymermaterials vor der Beschichtung mittels Grundierung erhöht wird. Hierdurch können die chemischen und physikalischen Eigenschaften der Silikatbeschichtung und damit deren Haftung verbessert werden. Als bevorzugte Grundierung werden dabei Bindemittel auf Basis von Acrylaten oder Polyurethanen verwendet.

Die Silikatdispersion wird beispielsweise in einer Schichtdicke von 0,1-30 µm auf dem Fluorpolymermaterial aufgebracht.

Die auf dem Fluorpolymermaterial aufgetragene Trockenschichtmenge kann zum Beispiel 0,1-20 g/m² betragen.

Das Aufbringen der Silikatdispersion auf dem Fluorpolymermaterial erfolgt bevorzugt bei Atmosphärendruck. Für die Verarbeitung der Dispersion können dadurch vorteilhafterweise einfache branchenübliche Druckvorrichtungen und Lackieranlagen eingesetzt werden.

Bevorzugt erfolgt das Trocknen der aufgebrachten Beschichtung durch einen Umlufttrockner. Dieser ermöglicht eine homogene Trocknung, die zusätzlich schneller erfolgt.

Gemäß einer bevorzugten Ausführungsform erfolgt das Aufbringen der Silikatdispersion auf einer Fluorpolymerfolie mittels Tiefdruckzylinder in einer Lackieranlage, wobei die Trocknerlänge bevorzugt 10-50 m und die Bahngeschwindigkeit 10-100 m/min beträgt.

Nachfolgend wird die Erfindung anhand eines Beispiels näher erläutert.

Der zweite Aspekt der Erfindung betrifft ein hydrophiles Fluorpolymermaterial, das einen Kontaktwinkel mit Wasser unter 30° aufweist und insbesondere durch das oben beschriebene Verfahren zur Herstellung einer hydrophilen Beschichtung erhältlich ist.

Vorzugsweise handelt es sich bei diesem hydrophilen Fluorpolymermaterial um eine beschichtete Fluorpolymerfolie.

### Beispiel:

Durch das Beispiel wird gezeigt, dass die erfindungsgemäß hergestellte Beschichtung aus Silikat-Nanopartikeln dazu führt, dass die Oberfläche des Fluorpolymermaterials hydrophil wird, wodurch sich auf der Oberfläche ein Wasserfilm bilden kann.

Für die Bereitstellung der wässrigen Dispersion werden Tetraethylsilikat-Nanopartikel, die gegebenenfalls hydrophil oberflächenmodifiziert wurden, unter Rühren in Wasser dispergiert. Der Feststoffgehalt der Dispersion beträgt etwa 10 Gew.%.

Die Verarbeitung und Aufbringung der wasserverdünnbaren Silikatdispersion auf einer ETFE-Folie erfolgt mittels Tiefdruckzylinder auf einer Lackieranlage, die bei Atmosphärendruck betrieben wird. Der Rasterzylinder taucht dabei in eine Wanne ein, die mit der Dispersion befüllt ist. Nach Abrakeln des Zylinders wird die Beschichtungsmasse auf die über Leitrollen geführte und an den Tiefdruckzylinder angepresste Folie übertragen.

Anschließend wird die aufgetragene Beschichtung durch einen Umlufttrockner geführt. Die Bahn- bzw. Trocknungslänge beträgt dabei 10-50 m und die Bahngeschwindigkeit wird auf 10-100 m/min eingestellt. Während des Trocknungsvorgangs erreicht die Reaktionstemperatur einen Wert zwischen 60°C und 100°C. Die auf der ETFE-Folie aufgetragene Trockenschichtmenge liegt in einem Bereich von 0,1-20 g/m².

Der Kontaktwinkel der Beschichtung wird danach gemessen und beträgt < 30°.

Der derart ohne großen technischen Aufwand hergestellte lichtstabile Schichtaufbau der Fluorpolymerfolie ist sowohl für den Innen- als auch den Außeneinsatz bestens geeignet. Statt teuren und schweren Glaskonstruktionen können damit kosteneffiziente Gebäude errichtet oder technische Werkstoffe in Leichtbauweise gefertigt werden, welche außerdem anders als kurzlebige (2-5 Jahre) PVC- oder Polyethylenfolien eine sehr lange Lebensdauer von ca. 20 Jahren aufweisen.

Die erfindungsgemäß hergestellte Beschichtung weist selbst nach jahrelanger Bewitterung einen Kontaktwinkel mit Wasser von < 30° auf, wie anhand beschleunigter Bewitterungsprüfungen mittels Xenonprüfgerät festgestellt wurde: der hydrophile Effekt der Beschichtung ist hier auch noch nach 9000 Stunden nachzuweisen.

## Patentansprüche

1. Verfahren zur Herstellung einer hydrophilen Beschichtung eines Fluorpolymermaterials, vorzugsweise einer Fluorpolymerfolie, wobei ein beschichtetes Fluorpolymermaterial erhalten wird, das einen Kontaktwinkel mit Wasser unter 30° aufweist, **dadurch gekennzeichnet, dass** es folgende Schritte umfasst:
- Bereitstellen einer wässrigen Dispersion von Silikat-Nanopartikeln,
- Aufbringen der Silikatdispersion auf dem Fluorpolymermaterial und
- Trocknen der aufgebrachten Beschichtung.

2. Verfahren nach Anspruch 1, **dadurch gekennzeichnet, dass** der Mittelwert der Partikelgrößenverteilung in der Dispersion 1-100 nm, bevorzugt 5-80 nm, besonders bevorzugt 10-60 nm, beträgt.

3. Verfahren nach Anspruch 1 oder 2, **dadurch gekennzeichnet, dass** das Trocknen der aufgebrachten Beschichtung bei einer Temperatur von 40-130°C, bevorzugt 60-120°C, besonders bevorzugt 60-100°C, erfolgt.

4. Verfahren nach einem der vorhergehenden Ansprüche, **dadurch gekennzeichnet, dass** das Trocknen der aufgebrachten Beschichtung für eine Dauer von 0,01-8 min, bevorzugt 0,05-7 min, besonders bevorzugt 0,1-5 min, erfolgt.

5. Verfahren nach nach einem der vorhergehenden Ansprüche, **dadurch gekennzeichnet, dass** die Silikat-Nanopartikel Tetraalkoxysilane, wie Tetraethylorthosilikat (TEOS), Tetramethylorthosilikat (TMOS), Tetrapropylorthosilikat (TPOS) und deren Polymere, umfassen, vorzugweise daraus bestehen.

6. Verfahren nach nach einem der vorhergehenden Ansprüche, **dadurch gekennzeichnet, dass** das Fluorpolymermaterial Ethylen-tetrafluorethylen-copolymer (ETFE), Polyvinylidendifluorid (PVDF) und/oder ein Fluorpolymer (FP) ist.

7. Verfahren nach einem der vorhergehenden Ansprüche, **dadurch gekennzeichnet, dass** die Oberflächenenergie des Fluorpolymermaterials mittels Grundierung erhöht wird.

8. Verfahren nach Anspruch 7, **dadurch gekennzeichnet, dass** die Grundierung auf Basis von wasserverdünnbaren Acrylat- und/oder Polyurethanbindemitteln erfolgt.

9. Verfahren nach einem der vorhergehenden Ansprüche, **dadurch gekennzeichnet, dass** das Aufbringen der Silikatdispersion auf dem Fluorpolymermaterial bei Atmosphärendruck erfolgt.

10. Verfahren nach einem der vorhergehenden Ansprüche, **dadurch gekennzeichnet, dass** das Trocknen der aufgebrachten Beschichtung durch einen Umlufttrockner erfolgt.

11. Verfahren nach einem der vorhergehenden Ansprüche, **dadurch gekennzeichnet, dass** das Aufbringen der Silikatdispersion auf einer Fluorpolymerfolie mittels Tiefdruckzylinder in einer Lackieranlage erfolgt, wobei die Trocknerlänge bevorzugt 10-50 m und die Bahngeschwindigkeit 10-100 m/min beträgt.

12. Hydrophiles Fluorpolymermaterial, das einen Kontaktwinkel mit Wasser unter 30° aufweist, insbesondere erhältlich durch das Verfahren nach einem der Ansprüche 1 bis 11.

13. Hydrophiles Fluorpolymermaterial nach Anspruch 12, **dadurch gekennzeichnet, dass** es sich um eine beschichtete Fluorpolymerfolie handelt.
